# EUROPEAN PATENT SPECIFICATION

(11) **EP 0 675 797 B1**
(45) Date of publication and mention of the grant of the patent: **16.07.1997**
(21) Application number: 94905434.0
(22) Date of filing: 17.12.1993
(51) Int. Cl.: B29C 70/02

(54) **METHOD FOR MANUFACTURING COMPOSITE ARTICLES HAVING ENHANCED EXTERIOR SURFACE FINISHES**
VERFAHREN ZUR HERSTELLUNG VON VERBUNDGEGENSTANDEN MIT VERBESSERTEN OBERFLACHEQUALITÄT
PROCEDE DE FABRICATION D'ARTICLES COMPOSITES AYANT DES FINIS DE SURFACES EXTERIEURES AMELIORES

(30) Priority: 23.12.1992 US 996259
(43) Date of publication of application: 11.10.1995
(73) Proprietor: UNITED TECHNOLOGIES CORPORATION, Stratford, CT 06601-1381 (US)
(72) Inventor: BOIVIN-IASSOGNA, Denise, L., Huntington, CT 06484 (US); DIONIZIO, Richard, J., Southington, CT 06489 (US); SANTISO, Joseph, M., III, Southbury, CT 06488 (US)
(74) Representative: Klunker . Schmitt-Nilson . Hirsch
(86) International application number: US9312343
(87) International publication number: WO9414601

(56) References cited:
- EP-A- 0 109 505
- EP-A- 0 361 823
- DE-A- 3 722 873
- FR-A- 2 483 846
- US-A- 3 974 124
- US-A- 4 161 471

## Description

### Technical Field

The present invention relates to methods for manufacturing composite articles, and more particularly, to a method for manufacturing composite articles having enhanced exterior surface finishes, the method including a mold assembly preparation procedure and an improved post-cure finishing procedure.

### Background of the Invention

Composites are commonly utilized for manufacturing a wide variety of articles, in particular aerospace structural parts, due to the advantageous combination of high strength and lightweight. Many of these composite aerospace structural parts incorporate honeycomb cores to further enhance the high strength and lightweight characteristics thereof. Composites may be formed from laminates or plies of woven cloths or mats, which are comprised of a matrix of orientated fibrous material such as graphite, aramids (e.g., Kevlar), boron, fiberglass, or the like, that are impregnated with an epoxy, polymeric, phenolic, or other similar organic resinous material. Generally, there are two manufacturing techniques for forming composite articles: prepreg systems utilizing vacuum-bagged, semi-rigid molding assemblies; and wet systems such as resin transfer molding.

Prepreg systems utilize fibrous laminates that have been preimpregnated with an organic resin, and staged and dried to form partially cured ("tacky") composite laminates. The composite laminates are layed-up in a mold assembly, and the layed-up mold assembly is vacuum bagged and temperature-pressure cured in an autoclave to form composite articles. Wet systems utilize fibrous plies that are layed-up in a mold assembly and impregnated with liquid resin. The layed-up mold assembly is then temperature-pressure cured in an autoclave to form composite articles.

While each of these manufacturing techniques have distinct advantages and disadvantages, composite articles manufactured utilizing either the prepreg or wet system technique have proven to be very satisfactory from mechanical strength and weight standpoints, especially for aerospace applications. Such composite articles, however, have proven less than satisfactory when cosmetic considerations, e.g., visual appearance, are an important factor. To a greater or lesser degree, almost all cured composite articles inherently contain minute surface defects due to the innate characteristics of present day composite materials and manufacturing techniques. The occurrence of minute surface defects vis-a-vis the exterior surfaces of cured composite articles adversely affects the visual appearance thereof, as described hereinbelow. As used herein, the term exterior surfaces encompasses those surfaces of the composite article that impact the cosmetic or visual appearance of the finished composite article, i.e., that are generally exposed for viewing.

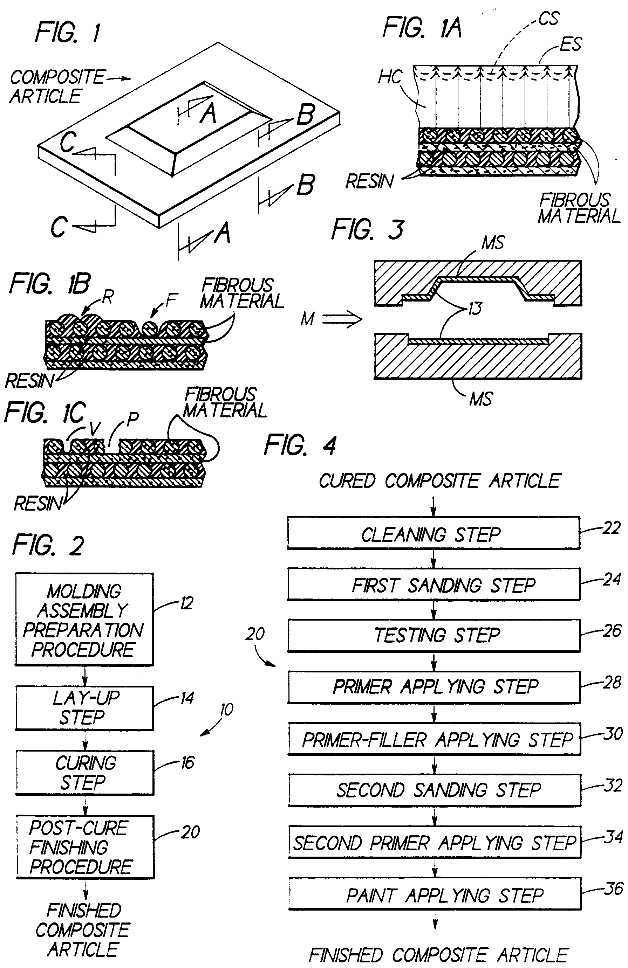

Figure 1 illustrates an exemplary cured composite article, in this case, a composite structural panel that comprises part of a helicopter fuselage. The illustrated composite panel incorporates a honeycomb core, i.e., an open faced structural member. One common surface defect, skin surface dimpling, which is similar to the dimpling on a golf ball, is illustrated in Figure 1A and is found in composite articles incorporating a honeycomb core. During the manufacturing process the composite skin CS indents into the openings of the honeycomb core HC such that the composite skin CS overlaying the honeycomb core HC does not lie flush with the external surface ES defined by the end of the honeycomb core HC.

Two more common surface defects are illustrated in Figure 1B and are a result of the nature of the laminates/plies, for example, fabric weave, the porosity of cured composite articles as a result of resin impregnation, i.e., resin-rich, resin-lean zones, and imperfections in the molding surfaces of the mold assembly. Rippling R denotes a composite surface zone that is devoid of fibrous material, i.e., resin-rich, and fuzzing F denotes a composite surface zone having unsupported fibrous material, i.e., resin-lean. Figure 1C illustrates other common surface defects such as pinholes P and voids V, which are a result of the innate characteristics of the composite materials and/or manufacturing techniques utilized to manufacture composite articles. For example, outgassing of entrapped air from the composite layup during the manufacturing process results in pinholes P while voids V may occur as a result of incomplete resin saturation of fibrous material or chipping or cracking of the resinous material.

While such surface defects are minute in nature, i.e., almost invisible to the naked eye and barely perceptible tactually, the negative cosmetic effects resulting from such surface defects are readily apparent to the eye when the exterior surfaces of the composite article are coated with primer and/or paint. Light is diffusely reflected from the minute surface defects of the coated exterior surfaces of composite articles, creating a visual impression of non-smooth exterior surfaces. Such a negative cosmetic impression may adversely affect the marketability of composite articles, especially in the aerospace market. Two interrelated approaches are generally utilized for the purpose of remediating the negative cosmetic impression arising from the inherent surface defects of composite articles to provide composite articles having enhanced exterior surface finishes, i.e., cosmetically smooth finishes.

The two approaches are generally utilized in conjunction with one another in an attempt to provide exterior surfaces having a visually smooth appearance. The first approach involves techniques or procedures employed prior to the curing stage of the manufacturing process to minimize the occurrence of surface defects arising out of the manufacturing process, i.e., a modification of a conventional manufacturing process. The second approach involves subjecting the exterior surfaces of cured composite articles to a post-cure finishing process in an attempt to substantially eliminate any surface defects that occur during the modified manufacturing process.

Any one of several pre-cure techniques, such as the utilization of precured composite skins, veil plies, or structural adhesives, may be employed to minimize the number of inherent surface defects arising out of composite article manufacturing processes. The use of precured composite skins as the initial step of the lay-up stage of the manufacturing process is advantageous inasmuch as such skins provide a well compacted ply against the mold surface. Further, precured composite skins facilitate the use of high pressure during the curing stage of the manufacturing process. Utilization of precured composite skins is disadvantageous in that the surface finish of the cured composite article depends upon the quality of the mold surface, and the fact that such a procedure is extremely labor intensive. In addition, composite articles formed from precured composite skins require an extra autoclave cycle, which adds to the overall cost of the cured article. Further, such cured composite articles have a higher weight than similar composite articles manufactured using conventional manufacturing techniques.

European Patent Application No. EPA-A3-0,361,823 describes a process for forming composite structures of thermoplastic polymer and sheet molding compound (SMC) that have particular utility as structural components of vehicles . The disclosed process includes the steps of thermoforming a thermoplastic polymeric sheet into a three dimensional structure to form a thermoformed structure; loading the thermoformed structure and a charge of SMC into a complementary die mold; and molding the thermoformed structure and the SMC charge by heat and pressure to cure the SMC and to adhere the SMC to the thermoformed structure to form the composite structure. The '828 patent application further teaches that the disclosed process may be utilized to form a finished composite structure having an outer layer of a clear glossy thermoplastic finish that is firmly bonded to a layer of thermoplastic pigment containing paint that is firmly bonded to a thin size layer of a thermoplastic polymer that is firmly bonded to the thermoformed structure. Composite parts formed by the foregoing process have a surface finish that is smooth and glossy, an excellent distinctiveness of image, and good color uniformity. The '828 patent application also teaches that composite structures/parts formed by the process described hereinabove have a class A surface which can be readily finished with paint or a gel coat without surface preparation such as cleaning and priming, thereby saving costs in the finishing process.

The utilization of veil plies allows manufacturing of composite articles that incorporate a sacrificial ply as the external surface layer of the cured composite article, i.e., the sacrificial ply overlays the cured composite skin. Veil plies, however, are difficult to handle during the lay-up stage since such plies are very tacky and fold easily, i.e., veil plies are unsuited for large lay-ups. In addition, composite articles manufactured utilizing veil plies have external surface qualities comparable to composite articles manufactured conventional manufacturing techniques, i.e., inherent surface defects such as resin-lean and/or resin-rich zones, fuzzing, etc.

Structural adhesives are easy to apply during the lay-up stage of the manufacturing process, and do not present any problems in the sanding phase of the post-cure finishing process. Structural adhesives, however, do not exhibit good flow and fill characteristics during the curing stage of the manufacturing process, and exhibit outgassing during the curing stage which causes the formation of pinholes in the cured composite article.

As noted hereinabove, the exterior surfaces of composite articles manufactured utilizing one of the modified manufacturing processes described in the preceding paragraphs, as well as composite articles manufactured utilizing conventional manufacturing processes, are subsequently subjected to a post-cure finishing process to smooth the surface finishes thereof, i.e., to substantially eliminate surface defects occurring as a result of the manufacturing process. Prior art post-cure finishing processes are very labor intensive and time consuming, which increases the overall cost of the finished composite article. In addition, such post-cure finishing processes generally result in weight increases in the finished composite article, which is a distinct disadvantage in aerospace applications. Moreover, such post-cure finishing processes may utilize processing chemicals and/or compounds that are subject to environmental regulation. One exemplary prior art post-cure finishing process that is utilized by the assignee of the present invention for post-cure finishing of composite structural parts for helicopters includes the steps of: (A) sanding the exterior surfaces of the cured composite article with rough grit sandpaper; (B) cleaning the sanded surfaces; (C) testing the cleaned exterior surfaces for cleanliness (D) applying primer to the smooth exterior surfaces; (E) applying filler to the primer-coated exterior surfaces; (F) sanding the filler-coated exterior surfaces; (G) applying primer to the sanded exterior surfaces; and (H) applying one or more coats of paint to the primer-coated exterior surfaces.

The exterior surfaces of the cured composite article are sanded with rough grit sandpaper, i.e., grit range of about 80-180. Sanding with rough grit sandpaper causes inherent surface defects such as rippling and fuzzing, the removal of any mold release agent adhering to the exterior surfaces, and/or the removal of any discontinuities formed as a result of post-cure mechanical operations such as trimming or drilling, i.e., to provide "clean" exterior surfaces. One skilled in the art will appreciate that "cleanliness", as used to define an exterior surface finish, is essentially a subjective quality that is not readily amenable to objective quantification. As used herein, "cleanliness" defines a surface that is essentially free from irregularities, roughness, or projections, and which, in consequence, has a cosmetically smooth visual appearance when coated with primer and/or paint. Qualitatively, a clean surface is one that passes a "waterbreak" test as described hereinbelow in further detail. The sanding step is labor intensive, and in addition, may result in degradation of the surface finish due to the coarseness of the sandpaper required for this step. For example, the sanding step may result in the excessive removal of resin from the exterior surfaces, causing the exposure of internal voids and/or fibrous material, i.e., fuzzing.

The sanded surfaces are then washed with a conventional solvent to remove particulate matter that has accumulated on the surfaces as a result of the sanding step, i.e., cleaning. Next, the cleaned exterior surfaces are tested for cleanliness. Qualitative testing for cleanliness is accomplished by means of a "waterbreak" test, which is based upon characteristics similar to those exhibited when a waxed automobile is washed. Water is sprayed upon the cleaned exterior surfaces of the composite article and the effects of the water are observed. Unimpeded water run-off indicates a clean surface area while water beading indicates an unclean surface area. Steps (A) and (B) are repeated as necessary until the waterbreak test indicates that all exterior surfaces are smooth. The inventors determined, based upon empirical evidence, that an average of four waterbreak tests were necessary to achieve smooth exterior surfaces on a typical composite article.

Next, the smooth exterior surfaces of the composite article are sprayed with a coating of primer such as MIL-P-85582. The primer coating effectively colors the exterior surfaces, and it is at this juncture that the exterior surfaces exhibit a noticeable visual appearance, i.e., any minute surface defects become visible to the naked eye due to diffusely reflected light. For example, surface defects such as pinholes and voids may not be affected by the prior sanding step(s). Moreover, as noted hereinabove, surface defects may be induced in the exterior surfaces during the sanding step(s).The primer-coated exterior surfaces are then spray-coated several times, e.g., three or four coats, with an epoxy filler such as Awl-Quik, and the filler-coated composite article is oven dried for about six to eight hours. The filler coatings are applied to smooth the primer-coated exterior surfaces, i.e., to fill-in any voids and pinholes and/or to provide surface build-ups adjacent ripples or exposed fibers. Filler coating the exterior surfaces, while providing relatively smooth finishes thereto, is disadvantageous in several respects. First and foremost, filler coatings significantly increase the overall weight of the finished composite product, a major drawback vis-a-vis aerospace applications. Filler coatings are subject to subsequent cracking and/or chipping. The dry cycle for filler coatings is excessively long. Some epoxy fillers, e.g., Awl-Quik, are environmentally hazardous materials, and can only be utilized if the necessary compliance waivers are procured from local, state, and/or federal environmental regulatory agencies.

The filler-coated exterior surfaces are then re-sanded with rough grit sandpaper to remove any remaining surface defects. The sanded exterior surfaces are then spray coated with primer. Again, at this juncture, any remaining surface defects are noticeable to the eye due to diffusely reflected light. The filler coating, sanding, and priming steps may be repeated as necessary to provide exterior surfaces having a smooth finish. Finally, one or more coats of paint (typically two) are applied to the smooth exterior surfaces and dried to form the finished composite article.

Conventional methods of manufacturing composite articles, and in particular, the post-cure finishing processes associated with such methods, are time consuming and labor intensive, which increases the overall cost of the finished composite article. Moreover, prior art post-cure finishing processes generally result in disadvantageous weight increases in the finished composite article. Further, such conventional methods may utilize environmentally deleterious chemicals and/or compounds.

A need exists to provide a method for manufacturing composite articles having enhanced exterior surface finishes, that is, smooth surface finishes that have a cosmetically pleasing visual appearance. The method should reduce the labor expenditures and processing costs associated with the post-cure finishing of such composite articles. The method should minimize the weight increases associated with the post-cure finishing of such composite articles. The method should eliminate the use of chemicals and/or compounds that are environmentally hazardous for post-cure finishing of such composite articles.

### Summary of the Invention

One object of the present invention is to provide a method for manufacturing composite articles having enhanced exterior surface finishes that project a cosmetically smooth visual appearance.

Another object of the present invention is to provide a method for manufacturing composite articles having enhanced exterior surfaces that includes a post-cure finishing procedure that minimizes weight increases associated with post-cure finishing of such composite articles.

Yet another object of the present invention is to provide a method for manufacturing composite articles having enhanced exterior surfaces that reduces the processing costs and labor expenditures associated with post-cure finishing of such composite articles.

Still another object of the present invention is to provide a method for manufacturing composite articles having enhanced exterior surfaces that utilizes environmentally safe chemicals and/or compounds for post-cure finishing of such composite articles.

These and other objects of the present invention are provided by a method for manufacturing a finished composite article having enhanced exterior surfaces that includes conventional lay-up and curing steps utilizing a conventional molding assembly having molding surfaces. The method includes the steps of applying a layer of surfacing film to the molding surfaces of the molding assembly, forming a composite lay-up in the molding assembly such that the layer of surfacing film comprises the outermost ply layer of the composite lay-up, curing the composite lay-up to form a cured composite article having exterior surfaces, the exterior surfaces of the cured composite article being formed by the cured surfacing film layer, and applying a post-cure finishing procedure to the cured composite article to form the finished composite article having enhanced exterior surfaces, the post-cure finishing procedure including a step of applying at least one coat of paint to sanded primer-filler coated exterior surfaces of the cured composite article to form the finished composite article having enhanced exterior surfaces.

The method is characterized in that the post-cure finishing procedure includes the steps of cleaning the exterior surfaces of the cured composite article with a surface cleaner, sanding the exterior surfaces of the cured composite article with a fine grit material to finely texturize the exterior surfaces thereof, waterbreak testing the finely texturized exterior surfaces of the cured composite article for cleanliness, applying a coat of primer to the finely texturized exterior surfaces of the cured composite article, applying at least one coat of primer-filler to the primer-coated exterior surfaces of the cured composite article, sanding the primer-filler coated exterior surfaces of the cured composite article with a fine grit material to remove surface defects therefrom, and applying a coat of primer to the sanded primer-filler coated exterior surfaces of the composite article.

The method may also be characterized by repeating the cleaning, sanding, and waterbreak testing steps as required until the waterbreak testing indicates that the finely texturized exterior surfaces of the cured composite article are clean. The method may further be characterized in that the step of applying at least one coat of primer-filler comprises applying at least one coat of a waterborne epoxy primer-filler to the primer-coated exterior surfaces of the cured composite article.

### Brief Description of the Drawings

A more complete understanding of the present invention and the attendant features and advantages thereof may be had by reference to the following detailed description when considered in conjunction with the accompanying drawings wherein:
Figure 1 illustrates an exemplary composite structure manufactured by conventional techniques.
Figure 1A, a partial cross-sectional view taken along line A-A of Figure 1, illustrates one type of surface defect inherent in cured composite articles incorporating honeycomb cores.
Figure 1B, a partial cross-sectional view taken along line B-B of Figure 1, illustrates two other types of surface defects inherent in cured composite articles.
Figure 1C, a partial cross-sectional view taken along line C-C of Figure 1, illustrates two more types of surface defects inherent in cured composite articles.
Figure 2 is a flowchart illustrating a method of manufacturing composite articles having enhanced exterior surfaces according to the present invention.
Figure 3 illustrates an exemplary molding assembly for manufacturing composite articles.
Figure 4 is a flowchart illustrating an improved post-cure finishing procedure for the method of manufacturing composite articles having enhanced exterior surfaces according to the present invention.

### Detailed Description of Preferred Embodiments

Referring now to the drawings wherein like reference characters identify identical or similar elements throughout the several views, Figure 2 illustrates a method 10 for manufacturing composite articles having enhanced exterior surface finishes according to the present invention. The method 10 may be utilized with either "prepreg" or "wet resin" systems. The method 10 provides finished composite articles with "smooth" exterior surfaces having a dramatically enhanced visual appearance, i.e., a visually smooth appearance. The method 10 further provides a significant savings in labor and cost in manufacturing composite articles and significantly reduces the time required for post-cure finishing of such composite articles in comparison with equivalent composite articles manufactured and post-cure finished utilizing conventional techniques, as described hereinbelow in further detail. Further, finished composite articles having enhanced exterior surfaces manufactured according to the present method 10 have a lower overall unit weight as compared to equivalent composite articles manufactured and post-cure finished utilizing conventional techniques.

The method 10 according to the present invention comprises a molding assembly preparation procedure 12, a conventional composite lay-up step 14, a conventional curing step 16, and a post-cure exterior surface finishing procedure 20. The composite lay-up step 14 and the curing step 16 comprise any one of the conventional manufacturing techniques generally used by one skilled in the art, i.e., prepreg or wet resin systems.

The molding assembly preparation procedure 12 prepares a molding assembly M, as exemplarily illustrated in Figure 3, for the conventional composite lay-up step 14. A layer of surfacing film 13 such as PL795 (B.F. Goodrich), AF325 (3M Aerospace) or FM99 (American Cyanamid) is applied to the molding surfaces MS of each molding tool comprising the molding assembly M. The molding assembly M should be at room temperature, and preferably, the surfacing film 13 is also at room temperature as this improves the handling characteristics thereof. The surfacing film 13 may be double-layered in areas where grinding, deburring, etc., normally occur, such as at hardware locations, sharp joggles (surface transition zones, e.g., short steps), etc.

Force is then applied to the layed-up surfacing film 13 utilizing conventional means such as a roller or squeegee to conform the layed-up surfacing film 13 to respective molding surface MS. The molding assembly M, as configured with layed-up surfacing film 13, is then vacuum bagged and debulked in an autoclave for a short period of time, e.g., about five to fifteen minutes, to eliminate any remaining air pockets. This ensures that the layed-up surfacing film 13 conforms to the molding surfaces MS of the molding assembly M.

As discussed hereinbelow in further detail, the surfacing film 13 comprises an integral part of the finished composite article. More specifically, the surfacing film 13 comprises the outermost ply layer that defines the exterior surfaces of the finished composite article manufactured by the method 10 according to the present invention. This is in contrast to the utilization of veil films as a pre-cure modification of the manufacturing process. The surfacing film 13 functions to substantially eliminate inherent surface defects inasmuch as the surfacing film 13 does not contain fibrous elements and is not subject to resin saturation during the manufacturing process.

Once the molding assembly preparation procedure 12 is completed, the lay-up step 14 is effected utilizing conventional techniques, depending upon whether a prepreg system or a wet resin system is being utilized to manufacture the composite article. For a prepreg system, prepreg laminates and any internal elements such as honeycomb cores, semi-rigid mandrels, etc., are layed-up in combination in the molding assembly M, i.e., the prepreg laminates overlay the surfacing film 13. The layed-up molding assembly M is prepared as required, e.g., vacuum bagged, for the curing step 16. For a wet resin system, dry plies of fibrous material and any internal elements are layed-up in combination in the molding assembly M, i.e., the dry plies overlay the surfacing film 13. The layed-up molding assembly M is prepared as required, e.g., matched male/female molding tools secured in combination, and an organic resin is injected under pressure into the closed molding assembly M to saturate the plies of the composite lay-up.

The layed-up molding assembly M is subjected to a predetermined cure cycle, i.e., pressure, temperature, time, in an autoclave as part of the conventional curing step 16. The cure pressure(s), cure temperature(s), and cure time(s) of the curing cycle are dictated by the fibrous material and organic resin forming the composite lay-up. After completion of the curing cycle, the cured composite article is removed from the molding assembly M and subjected to conventional mechanical operations such as trimming, drilling, etc., as required. The mechanical operations should be effected in such manner as to ensure that the exterior surfaces of the composite article are not deburred or ground, as this would break into the surfacing ply 13 and adversely affect the exterior surface finish provided by the post-cure finishing procedure 20 according to the present invention as described in the following paragraphs.

The post-cure finishing procedure 20 according to the present invention is exemplarily illustrated in Figure 4 and comprises a cleaning step 22, a first sanding step 24, a testing step 26, a first primer applying step 28, a primer-filler applying step 30, a second sanding step 32, a second primer applying step 34, and a paint applying step 36. The exterior surfaces of the cured composite article are wiped clean in cleaning step 22 utilizing a surface cleaner for composite materials such as 3M General Purpose Adhesive Cleaner #08984 (3M Co., St. Paul, Mn) to remove mold release agent, oil, dirt, etc, adhering to the cured composite article. Next, the clean exterior surfaces of the composite article are sanded in step 24 utilizing a fine grit sandpaper. For the post-finishing procedure 20 according to the present invention, fine grit sandpaper is defined as sandpaper of about 400 grit, such as 3M Gold Stikit Film. The sanding step 24 is operative to "scuff", i.e., lightly roughen or finely texturize, the surfacing film 13 which defines the smooth exterior surfaces of the composite article to provide an exterior surface texture that facilitates the adherence of the primer coating applied in the primer applying step 28. The sanding step 24 also operates to remove any remaining traces of mold release agent from the exterior surfaces.

The cleaned, texturized exterior surfaces are then tested for cleanliness in the testing step 26 utilizing the waterbreak test described hereinabove. If waterbreak testing indicates that exterior surface areas are not clean, the cleaning and sanding steps 22, 24 are sequentially repeated, as required, to attain exterior surfaces having a clean surface finish. The inventors determined, based upon empirical evidence, that a single waterbreak test is required to achieve clean exterior surfaces on a typical cured composite article, as compared to an average of four waterbreak test utilizing a conventional post-cure finishing process.

A single coat of primer such as MIL-P-85582 is applied to the sanded exterior surfaces in step 28 and allowed to dry for a short period of time, e.g., ten to fifteen minutes. In step 30, at least one coat, e.g., typically three to four coats, of a waterborne epoxy primer-filler such as DuPont 275S gray/DuPont 285S activator (E.I. du Pont de Nemours Co.) is applied to the primer-coated exterior surfaces of the composite article. Each applied coat of primer-filler should be allowed to "flash", i.e., dry, for a period of about three to five minutes before the next coat is applied. After the last coat of primer-filler is applied, the primer-filler coated composite article should be oven dried at a predetermined temperature for a predetermined period of time, based upon the characteristics of the waterborne epoxy primer-filler utilized in step 30. For waterborne epoxy primer-fillers such as DuPont 275S/285S, about 110°F and no less than one hour and no more than four hours, respectively.

The use of a waterborne epoxy primer-filler in step 30 greatly reduces the drying cycle time necessary to achieve a composite article having primer-filler coated external surfaces, e.g., about one to four hours versus about six to eight hours for the epoxy filler utilized in the conventional post-cure finishing procedure described hereinabove. Moreover, for equivalent composite articles, a primer-filler coated composite article has a lower overall weight than a composite article at a comparable stage in a conventional post-cure finishing procedure such as that described hereinabove. Furthermore, waterborne epoxy primer-fillers such as DuPont 275S and DuPont 285S are environmentally safe, i.e., do not require environmental compliance waivers for utilization.

Once the primer-filler coated exterior surfaces are dry (e.g., primer-filler coating is dry if a fingernail cannot be pressed into the coating), the primer-filler coated exterior surfaces are sanded in step 32 utilizing a fine grit sandpaper, e.g., about 400 grit. The primer-filler coated exterior surfaces are sanded to remove surface defects, i.e., the primer-filler coated exterior surfaces have a smooth finish. Once the sanding step 32 is completed, another coating of primer such as MIL-P-85582 is applied to the sanded exterior surfaces in step 34 and allowed to dry. Finally, in step 36 one or more coats of paint, two coats for the embodiment described herein, are applied to the primer-coated, smooth exterior surfaces and allowed to dry to form a finished composite article having enhanced exterior surfaces.

The method 10 for manufacturing composite articles having enhanced exterior surface finishes as described hereinabove offers several distinct advantages over composite articles manufactured utilizing conventional manufacturing and post-cure finishing techniques. In addition to providing finished composite articles having exterior surfaces that have a visually smooth appearance, the method 10 according to the present invention has a significantly lower overall cycle time, provides significant savings in labor time and labor costs, and results in a lower overall total manufacturing cost. In addition, the method 10 significantly reduces incidences of rework for finished composite products, i.e., stripping and reapplying filler finished composite articles to eliminate latent minute surface defects.

To quantify these advantages, the inventors gathered empirical data on the manufacturing costs, labor expenditures, and times associated with the manufacture of identical composite articles utilizing the method 10 according to the present invention as contrasted with conventional manufacturing and post-cure finishing techniques, i.e., the prior art method. Such empirical data showed that the method 10 according to the present invention has a cycle time of about 3 hours versus a cycle time of about 8 hours for the prior art method (excluding the time required for the conventional lay-up and cure processes under both methods). The labor expenditure for the method 10 was about 0,024 h/m² (0.26 hrs/ft²) versus about 0,038 h/m² (0.41 hrs/ft²) for the prior art method, a reduction of about 37%. Concomitantly, labor costs for the method 10 were about $1,99/m² ($21.43/ft²) versus about $1,25/m² ($13.46/ft²) for the prior art method for a similar reduction in labor costs. Material costs for the method 10, however, were higher than the material costs for the prior art method due to the use of the surfacing film 13 in the molding assembly preparation procedure 12 of the method 10. Material costs for the method 10 were about $4,36/m² ($46.89/ft²) versus about $3,95/m² ($42.53/ft²) for the prior art method.

Total manufacturing costs for the method 10 were about $5,61/m² ($60.35/ft²) versus about $5,94/m² ($63.96/ft²) for the prior art method. This represents an overall cost savings of about $0,335/m² ($3.61/ft²) for the method 10 according to the present invention. This translates into overall manufacturing cost savings of about $1230/unit for NAVAL HAWK helicopters (the naval variant of the Sikorsky S-70 BLACKHAWK helicopter), about $5250/unit for the CH-53E helicopter, and about $1440/unit for the Sikorsky S-76® helicopter. Identical composite articles manufactured utilizing the method 10 of the present invention and the prior art method were weighed before and after the application of paint coatings to determine overall weight savings between the method 10 and the prior art method. Documented data showed that the method 10 results in an overall weight savings of about 0,0033 kg/m² (0.08 lbs/ft²) over the prior art method. This translates into overall aircraft weight savings of about 12,27 kg/unit (27 lbs/unit)for NAVAL HAWK helicopters, about 52 kg/unit (116 lbs/unit) for CH-53E helicopters, and about 14,54 kg/unit (32 lbs/unit) for S-76® helicopters.

The foregoing documented savings were based upon the use of surfacing films 13 such as AF325 or FM99 in the molding assembly preparation step 12 of the method 10. Preliminary data indicates that the use of PL795 as the surfacing film 13 may result in significantly greater overall cost savings for the method 10. More specifically, the preliminary data indicates that an overall cost savings of about $0,68/m² ($7.29/ft²) (versus $0,33/m² ($3.61/ft²)) may be achieved as a result of the method 10 by utilizing PL795 as the surfacing film 13. This a result of material cost reductions based upon the unit cost for PL795 (about $0,18/m² ($1.90/ft²)) versus the unit costs associated with AF325 or FM99 (about $0,53/m² ($5.67/ft²)).

A variety of modifications and variations of the present invention are possible in light of the above teachings. It is therefore to be understood that, within the scope of the appended claims, the present invention may be practiced otherwise than as specifically described herein.

## Claims

1. A method for manufacturing a finished composite article having enhanced exterior surfaces, said method including conventional lay-up and curing steps utilizing a conventional molding assembly having molding surfaces, comprising the steps of:
(12) applying a layer of surfacing film to the molding surfaces of the molding assembly;
(14) forming a composite lay-up in the molding assembly, said layer of surfacing film being the outermost ply layer of the composite lay-up;
(16) curing the composite lay-up to form a cured composite article having exterior surfaces, the exterior surfaces of the cured composite article being formed by the cured surfacing film layer; and
(20) applying a post-cure finishing procedure to the cured composite article to form the finished composite article having enhanced exterior surfaces, including a step (36) of applying at least one coat of paint to sanded primer-filler coated exterior surfaces of the cured composite article to form the finished composite article having enhanced exterior surfaces;
characterized in that said post-cure finishing procedure (20) further includes the steps of
(22) cleaning the exterior surfaces of the cured composite article with a surface cleaner;
(24) sanding the exterior surfaces of the cured composite article with a fine grit material to finely texturize the exterior surfaces thereof;
(26) waterbreak testing the finely texturized exterior surfaces of the cured composite article for cleanliness;
(28) applying a coat of primer to the finely texturized exterior surfaces of the cured composite article;
(30) applying a least one coat of primer-filler to the primer-coated exterior surfaces of the cured composite article;
(32) sand the primer-filler coated exterior surfaces of the cured composite article with a fine grit material to remove surface defects therefrom; and
(34) applying a coat of primer to the sanded primer-filler coated exterior surfaces of the composite article.

2. The method of manufacturing a finished composite article of claim 1 characterized in that steps (22) - (26) are repeated as required until said waterbreak testing step (26) indicates that the finely texturized exterior surfaces of the cured composite article are clean.

3. The method of manufacturing a finished composite article of claim 1 characterized in that said step (30) of applying at least one coat of primer-filler comprises applying at least one coat of a waterborne epoxy primer-filler to the primer-coated exterior surfaces of the cured composite article.

## Patentansprüche

1. Verfahren zum Herstellen eines mit Finish versehenen Verbundgegenstands mit Außenoberflächen gesteigerter Güte, wobei das Verfahren die konventionellen Schritte des Aufbaus und Härtens beinhaltet und eine konventionelle Formgebungsanordnung mit Formgebungsoberflächen verwendet und wobei es die folgenden Schritte aufweist:
(12) Aufbringen einer Lage einer Oberflächenschicht auf die Formgebungsoberflächen der Formgebungsanordnung;
(14) Bilden eines Verbundaufbaus in der Formgebungsanordnung, wobei die Lage der Oberflächenschicht die äußerste Schichtlage des Verbundaufbaus ist;
(16) Härten des Verbundaufbaus, um einen gehärteten Verbundgegenstand mit Außenflächen zu bilden, die von der gehärteten Lage der Oberflächenschicht gebildet sind; und
(20) Durchführen eines Finish-Verfahrens nach dem Härten an dem gehärteten Verbundgegenstand, um den mit Finish versehenen Verbundgegenstand mit den Außenoberflächen gesteigerter Güte zu bilden, das einen Schritt (36) des Aufbringens mindestens einer Farbschicht auf abgeschliffene, grundierfüllerbeschichtete Außenoberflächen des gehärteten Verbundgegenstands zum Bilden des mit Finish versehenen Verbundgegenstands mit Außenoberflächen gesteigerter Güte aufweist;
dadurch gekennzeichnet,
daß das nach dem Härten durchgeführte Finish-Verfahren (20) ferner die folgenden Schritte aufweist:
(22) Säubern der Außenoberflächen des gehärteten Verbundgegenstands mit einem Oberflächenreiniger;
(24) Abschleifen der Außenoberflächen des gehärteten Verbundgegenstands mit einem feinkörnigen Material, um dessen Außenoberflächen fein zu texturieren;
(26) Unterziehen der fein texturierten Außenoberflächen des gehärteten Verbundgegenstands einem Wasserabreißtest auf Sauberkeit;
(28) Aufbringen einer Grundierungsschicht auf die fein texturierten Außenoberflächen des gehärteten Verbundgegenstands;
(30) Aufbringen mindestens einer Schicht von Grundierfüller auf die mit einer Grundierungsschicht versehenen Außenoberflächen des gehärteten Verbundgegenstands;
(32) Abschleifen der grundierfüllerbeschichteten Außenoberflächen des gehärteten Verbundgegenstands mit einem feinkörnigen Material, um davon Oberflächendefekte zu entfernen; und
(34) Aufbringen einer Grundierungsschicht auf die abgeschliffenen, grundierfüllerbeschichteten Außenoberflächen des Verbundgegenstands.

2. Verfahren zum Herstellen eines mit Finish versehenen Verbundgegenstands nach Anspruch 1,
dadurch gekennzeichnet,
daß die Schritte (22)-(26) nach Bedarf wiederholt werden, bis der Wasserabreißtestschritt (26) anzeigt, daß die fein texturierten Außenoberflächen des gehärteten Verbundgegenstands sauber sind.

3. Verfahren zum Herstellen eines mit Finish versehenen Verbundgegenstands nach Anspruch 1,
dadurch gekennzeichnet,
daß der Schritt (30) des Aufbringens mindestens einer Grundierfüllerschicht das Aufbringen mindestens einer Schicht aus Epoxy-Grundierfüller in Wasser auf die mit einer Grundierungsschicht versehenen Außenoberflächen des gehärteten Verbundgegenstands umfaßt.

## Revendications

1. Procédé pour fabriquer un article composite fini ayant des surfaces extérieures améliorées, ledit procédé comprenant des étapes classique d'application de couches et de durcissement en utilisant un ensemble classique de moulage ayant des surfaces de moulage, comprenant les étapes consistant à :
(12) appliquer une couche de pellicule de surfaçage aux surfaces de l'ensemble de moulage;
(14) former un stratifié composite dans l'ensemble de moulage, ladite couche de pellicule de surfaçage étant la couche la plus extérieure du stratifié composite;
(16) faire durcir le stratifié composite pour former un article composite durci ayant des surfaces extérieures, les surfaces extérieures de l'article composite durci étant formées par la couche durcie de pellicule de surfaçage; et
(20) appliquer une procédure de finition post-durcissage à l'article composite durci pour former l'article composite fini ayant des surfaces extérieures améliorées, comprenant une étape (36) consistant à appliquer au moins un revêtement de peinture aux surfaces extérieures sablées revêtues de matériau de charge de fond sablées de l'article composite durci pour former l'article composite fini ayant des surfaces extérieures améliorées;
caractérisé en ce que ladite procédure de finition post-durcissage (20) comprend de plus les étapes consistant à
(22) nettoyer les surfaces extérieures de l'article composite durci avec un nettoyeur de surface;
(24) sabler les surfaces extérieures de l'article composite durci avec un matériau abrasif fin pour texturiser finement ses surfaces extérieures;
(26) tester à l'eau la propreté des surfaces extérieures de l'article composite durci finement texturisées;
(28) appliquer une couche de fond aux surfaces extérieures finement texturisées de l'article composite durci;
(30) appliquer au moins un revêtement de matériau de charge de fond aux surfaces extérieures de l'article composite durci revêtues d'une couche de fond;
(32) sabler les surfaces extérieures de l'article composite durci revêtues de matériau de charge de fond avec un matériau abrasif fin pour enlever leurs défauts de surface; et
(34) appliquer un revêtement de fond aux surfaces extérieures de l'article composite revêtues d'un matériau de charge de fond sablées.

2. Procédé de fabrication d'un article composite fini selon la revendication 1 caractérisé en ce que les étapes (22) - (26) sont répétées autant que nécessaire jusqu'à ce que ladite étape de test par rupture du film d'eau (96) indique que les surfaces extérieures de l'article composite durci finement texturisées sont propres.

3. Procédé de fabrication d'un article composite fini selon la revendication 1 caractérisé en ce que ladite étape (30) consistant à appliquer au moins un revêtement de matériau de charge de fond comprend l'application d'au moins un revêtement d'un matériau de charge de fond époxy à l'eau aux surfaces extérieures de l'article composite durci revêtues d'une couche de fond.
